# EUROPEAN PATENT APPLICATION

(11) **EP 2 781 815 A1**
(43) Date of publication of application: **24.09.2014**
(21) Application number: 12849375.6
(22) Date of filing: 14.11.2012
(51) Int. Cl.: F16L 13/02, F01N 13/08

(54) **WELDING CONNECTION STRUCTURE FOR PIPE**

(30) Priority: 14.11.2011 JP 2011248872
(71) Applicant: Futaba Industrial Co. Ltd., Okazaki-shi, Aichi 444-8558 (JP)
(72) Inventor: TANAKA, Yoshiki, Okazaki-shi Aichi 444-8558 (JP); ARISAWA, Naotaka, Okazaki-shi Aichi 444-8558 (JP); TAKEMOTO, Naohiro, Okazaki-shi Aichi 444-8558 (JP); MORII, Hideyuki, Okazaki-shi Aichi 444-8558 (JP)
(74) Representative: Otten, Roth, Dobler & Partner
(86) International application number: PCT/JP2012/079541
(87) International publication number: WO 2013/073589

(57) **Abstract**

Provided is a welding connection structure for a pipe (1), in which the pipe has a double-pipe portion (2) at at least one end thereof and the double-pipe portion is formed by bending back a pipe wall (6) at the one end of the pipe inward and forming a bent-back portion in close contact with an outer pipe wall (4), and in which the pipe is connected by welding, at the double-pipe portion, to a mating member (11) to which the pipe is to be connected.

## Description

### CROSS-REFERENCE TO RELATED APPLICATIONS

This international application claims the benefit of Japanese Patent Application No.2011-248872 filed November 14, 2011 in the Japan Patent Office, and the entire disclosure of Japanese Patent Application No. 2011-248872 is incorporated herein by reference.

### TECHNICAL FIELD

The present invention relates to a welding connection structure for an exhaust pipe, etc., provided in an exhaust system of an internal combustion engine.

### BACKGROUND ART

In an exhaust system of an internal combustion engine, an exhaust manifold, for example, is provided that gathers exhaust gases from each exhaust port of the internal combustion engine to lead the exhaust gases to a downstream side. On the downstream side of the exhaust manifold is provided a purifier that purifies the exhaust gasses from the internal combustion engine, a muffler that reduces exhaust noise, and the like (see, for example, Patent Document 1).

In this type of exhaust system, a flange connection is used as described in Patent Document 1. An exhaust pipe and a flange member are connected to each other by welding, for example.

### PRIOR ART DOCUMENTS

### PATENT DOCUMENTS

Patent Document 1: Japanese Unexamined Patent Application Publication No. 2011-169201

### SUMMARY OF THE INVENTION

### PROBLEMS TO BE SOLVED BY THE INVENTION

Unfortunately, in such conventional approaches, reducing the thickness of the exhaust pipe to reduce weight causes a larger difference in heat capacity between the exhaust pipe and the flange member, thereby making good welding conditions difficult to obtain. This sometimes leads to a hole in the exhaust pipe caused by burn-through on the exhaust pipe side when arc welding (especially, metal inert gas welding) is performed. An exhaust pipe having a hole formed in this manner cannot be repaired, or has to be discarded, even if repaired, due to problems in durability, etc.

It is desired that, in a welding connection structure for a pipe, burn-through during welding can be prevented even if the thickness of the pipe is reduced.

### MEANS FOR SOLVING THE PROBLEMS

In a first aspect of the present invention, provided is a welding connection structure for a pipe, in which the pipe has a double-pipe portion at at least one end thereof, and the double-pipe portion is formed by bending back a pipe wall at the one end of the pipe inward and forming a bent-back portion in close contact with an outer pipe wall, and in which the pipe is connected by welding, at the double-pipe portion, to a mating member to which the pipe is to be connected.

In a second aspect of the present invention, the pipe is configured such that at least a part of the double-pipe portion has a larger outer diameter than an other part, such that a portion between the at least a part of the double-pipe portion (hereinafter referred to as a large-diameter portion) and a portion having a smallest outer diameter in the pipe (hereinafter referred to as a small-diameter portion) is formed in a tapered shape, and such that the portion formed in a tapered shape (hereinafter referred to as a tapered portion) is formed to have a taper angle θ smaller than 25 degrees.

The angle θ is an angle of an acute-angled part formed by a line extended from an outer surface of the large-diameter portion along its longitudinal direction (axial direction) and an outer surface of the tapered portion (i.e., an interior angle between a line extended from an outer surface of the large-diameter portion and an outer surface of the tapered portion). When the pipe is connected to the mating member, the angle θ is an angle of an acute-angled part formed by a line extended from an outer surface of the mating member along its axial direction and an outer surface of the tapered portion (i.e., an interior angle between a line extended from an outer surface of the mating member and an outer surface of the tapered portion) on the premise that the pipe is coaxially connected to the mating member.

In a third aspect of the present invention, an inner diameter of the large-diameter portion is approximately the same as an inner diameter of a single-walled portion, which is a portion other than the double-pipe portion.

In a fourth aspect of the present invention, at least a part of the tapered portion is configured as the double-pipe portion.

### EFFECTS OF THE INVENTION

According to the present invention, the pipe is welded at the double-pipe portion to the mating member. The portion of the pipe other than the double-pipe portion may have a single structure, thus leading to a reduced weight of the entire pipe and, by extension, of the entire welding connection structure. Welding at the double-pipe portion can help prevent burn-through of the pipe caused by welding. Specifically, this can reduce the difference in thickness between the double-pipe portion and the mating member having a relatively larger thickness compared with the pipe, thereby reducing the difference in heat capacity between the double-pipe portion and the mating member. Therefore, a phenomenon where the double-pipe portion (the pipe) burns through from overheating hardly occurs.

Forming the tapered portion with a taper angle θ smaller than 25 degrees can reduce stress concentration at the tapered portion. Thus, even if the thickness of the pipe is reduced, breakage at the tapered portion can be prevented. Furthermore, forming the inner diameter of the outer-diameter portion having larger outer diameter in the double-pipe portion to be approximately the same as the inner diameter of the portion other than the double-pipe portion (i.e., the single-walled portion being the portion having a single-structured, not double-structured, pipe wall) can prevent an increase in flow channel resistance, thereby causing no deterioration in performance of emitting a fluid (an exhaust gas, for example).

### BRIEF DESCRIPTION OF THE DRAWINGS

FIG. 1 is a cross-sectional view of a welding connection structure for a pipe according to a first embodiment of the present invention.
FIG. 2 is an enlarged cross-sectional view of Part A in FIG. 1.
FIG. 3 is a diagram showing relationships between taper angle θ and stresses.
FIG. 4 is a cross-sectional view of a welding connection structure according to a second embodiment of the present invention.
FIG. 5 is an enlarged cross-sectional view of Part B in FIG.4.

### EXPLANATION OF REFERENCE NUMERALS

1...pipe, 1a...single-walled portion, 1b...small-diameter portion, 2...double-pipe portion, 3...tapered portion, 4, 6-8...pie wall, 9... end portion, 11... flange member, 12...cylindrical portion

### MODE FOR CARRYING OUT THE INVENTION

Hereinafter, an embodiment for carrying out the present invention will be described in detail with reference to the drawings.

### First Embodiment

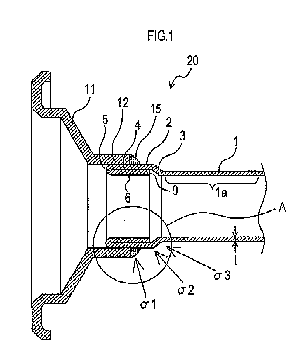

A welding connection structure 10, as an embodiment of the present invention as shown in FIG. 1, is a structure that can be applied to an exhaust system of an internal combustion engine, in which a pipe 1 and a flange member 11 are connected to each other by welding.

In the first embodiment of the present invention, the pipe 1 is a so-called thin-wall-type pipe (cylindrical pipe). Thickness t of the pipe 1 may be 0.8 mm, for example.

The flange member 11 is press-formed of a plate having a thickness of 3.2 mm, for example.

A double-pipe portion 2 is formed at one end of the two ends of the pipe 1. The double-pipe portion 2 is configured such that a pipe wall 6 at the one end of the pipe 1 is bent back inward of the pipe 1 and a bent-back portion (the pipe wall 6) is formed in close contact with a pipe wall 4 located outside. Thus, the double-pipe portion 2 is configured to have a double-structured pipe wall.

In the first embodiment as shown in FIG. 1, an end portion 9 of the pipe wall 6 terminates without reaching a tapered portion 3. That is, the tapered portion 3 is configured to have a single-structured pipe wall.

In the pipe 1, the double-pipe portion 2 is configured to have a larger outer diameter compared with the portion other than the double-pipe portion 2 (the double-pipe portion 2 has enlarged diameters). To be more specific, the double-pipe portion 2 has a larger outer diameter than a single-walled portion 1a having a single-structured, not double-structured, pipe wall. The double-pipe portion 2 generally has a larger outer diameter than the tapered portion 3, which forms a portion between the double-pipe portion 2 and the single-walled portion 1a. That is, the pipe 1 has outer diameters gradually increasing from the single-walled portion 1a via the tapered portion 3 to the largest at the double-pipe portion 2, with the outer diameter being the smallest at the single-walled portion 1a.

The double-pipe portion 2 may have an outer diameter (a diameter) larger by 2t, for example, compared with the single-walled portion 1a.

An inner diameter of the double-pipe portion 2 is approximately the same as an inner diameter of the single-walled portion 1a. The double-pipe portion 2 is configured to have an outer diameter (a diameter) larger by 2t while having a reduced inner diameter by being configured to have a double-structured pipe wall. This enables the inner diameter of the double-pipe portion 2 to be approximately the same as the inner diameter of the single-walled portion 1a as described above.

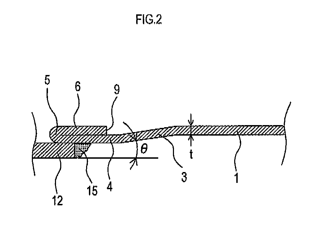

The tapered portion 3 is formed to have a taper angle θ (see FIG. 2) smaller than 25 degrees.

As is obvious with reference to FIG. 2, the angle θ is an angle of an acute-angled part formed by a line extended from an outer surface of the flange member 11 along its axial direction (axial direction of the pipe 1 as well as of the flange member 11) and an outer surface of the tapered portion 3 (i.e., an interior angle between a line extended from an outer surface of the flange member 11 and an outer surface of the tapered portion 3).

A connection structure, between the pipe 1 and the flange member 11, as a connection target (mating member) will be described below.

Firstly, at least a part of the double-pipe portion 2 of the pipe 1 is inserted into a cylindrical portion 12 of the flange member 11. Specifically, the pipe 1 is inserted into the cylindrical portion 12 so that at least a connecting portion (bent portion) 5 between the pipe wall 4 and the pipe wall 6 enters the inside of the cylindrical portion 12. At this time, at least a part of the double-pipe portion 2 stays outside the cylindrical portion 12. That is, the double-pipe portion 2 does not completely enter the cylindrical portion 12.

Under such conditions, the cylindrical portion 12 and the double-pipe portion 2 are welded (fillet welded) together. The welding is performed within an area where a fillet portion 15 does not extend beyond the double-pipe portion 2. The flange member 11 and the pipe 1 are welded together so that the fillet portion 15 is formed along the entire circumference of a connected portion between the cylindrical portion 12 and the double-pipe portion 2.

Meanwhile, there are concerns that a large difference in dimensions, such as plate thickness, of two members to be welded together causes a large difference in heat capacity between the two, thereby making it difficult to perform good welding.

However, the double-pipe portion 2 of the pipe 1 has a double-structured pipe wall to thereby provide about a double thickness. In such a case, the difference in plate thickness between the cylindrical portion 12 and the double-pipe portion 2 becomes small, thus enabling the difference in heat capacity between the cylindrical portion 12 and the double-pipe portion 2 to also be small.

This can prevent occurrence of a phenomenon in which the double-pipe portion 2 is burnt through from overheating even when welding (metal inert gas welding, for example) is performed. Therefore, it is relatively easy to weld the entire circumference of the connected portion between the cylindrical portion 12 and the double-pipe portion 2.

In the first embodiment of the present invention in particular, the cylindrical portion 12 and the double-pipe portion 2 can have the same level of heat capacity as each other. Having the same level of heat capacity can remarkably reduce the difficulty of welding. In addition, about the double thickness of the double-pipe portion 2 can prevent occurrence of a burn-through or hole opening failure at the double-pipe portion 2 during welding because of the increased thickness. In some cases, by melting and welding not only the pipe wall 4 but also a part of the pipe wall 6 of the double-pipe portion 2, the strength of the welded portion can be ensured or improved.

Thus, according to the first embodiment of the present invention, the pipe 1 is configured such that the double-pipe portion 2 is formed to have a double-structured pipe wall at a portion thereof to be welded, to thereby provide a thickness of about double the thickness of the pipe 1 (the thickness of the single-walled portion 1a). This enables the thickness of the pipe 1 itself to be reduced, to thereby reduce the weight of the pipe 1 and, by extension, the weight of the entire structure. Furthermore, the double structure of the double-pipe portion 2 can reduce the difference in heat capacity between the double-pipe portion 2 and the cylindrical portion 12 of the flange member 11, thereby ensuring the ease of welding.

In the first embodiment of the present invention, the inner diameter of the double-pipe portion 2 is approximately the same as the inner diameter of the single-walled portion 1a, thereby preventing an increase in flow channel resistance.

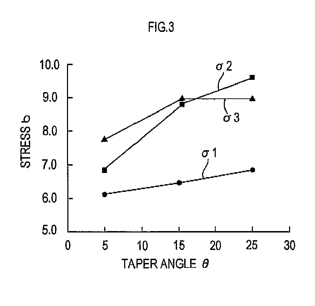

Also in the first embodiment of the present invention, forming the tapered portion 3 to have a taper angle θ (see FIG. 2) smaller than 25 degrees can reduce stress concentration at the tapered portion 3. Thus, even if the thickness of the pipe 1 is reduced, breakage at the tapered portion 3 can be prevented. FIG. 3 shows relationships between taper angle θ and stress σ1 at the welded portion, stress σ2 at the tapered portion on the large-diameter portion side, and stress σ3 at the tapered portion on the small-diameter portion side when a pressing force in the axial direction of the pipe 1 is applied.

As the taper angle θ decreases, the stress σ2 at the tapered portion on the large-diameter portion side and the stress σ3 at the tapered portion on the small-diameter portion side decrease. Forming the tapered portion 3 to have a taper angle θ smaller than 25 degrees can prevent an increase in the stresses at the tapered portion 3. Thus, even if the thickness of the pipe 1 is reduced, breakage at the tapered portion 3 can be prevented and, at the same time, the stress σ1 at the welded portion can be reduced. A taper angle θ equal to or larger than 25 degrees may possibly increase the stress σ2 at the tapered portion on the large-diameter portion side and the stress σ3 at the tapered portion on the small-diameter portion side, and, by extension, the stress σ1 at the welded portion.

### Second Embodiment

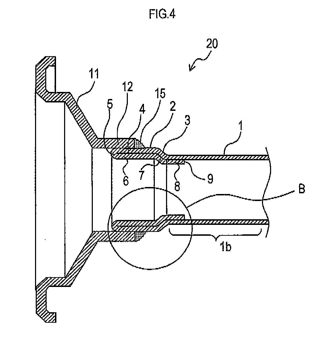

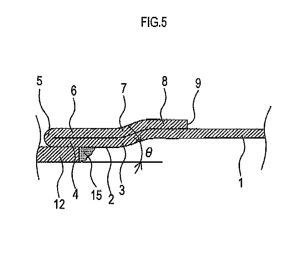

FIGS. 4 and 5 illustrate a welding connection structure 20 according to a second embodiment.

In the welding connection structure 20, a double-pipe portion 2 is formed in a wider area as compared to the welding connection structure 1 shown in FIGS. 1 and 2.

Specifically, the double-pipe portion 2 is formed to include a tapered portion 3 and a part of the portion indicated as the single-walled portion 1a in FIG. 1. The single-walled portion 1a in FIG. 1 is indicated as a small-diameter portion 1b in FIG. 4.

As shown in FIGS. 4 and 5, an end portion 9 extends beyond the tapered portion 3 to reach the small-diameter portion 1b to terminate. A pipe wall 8 is in close contact with a part of a pipe wall of the small-diameter portion 1b, with a pipe wall 7 being in close contact with a pipe wall of the tapered portion 3 and with a pipe wall 6 being in close contact with a pipe wall 4.

Thus, in the second embodiment of the present invention, configuring at least the tapered portion 3 also as the double-pipe portion 2 can improve the strength of the tapered portion 3, thereby more securely preventing breakage, etc., at the tapered portion 3.

Also in the second embodiment of the present invention, a taper angle θ (see FIG. 5) smaller than 25 degrees is desired.

The present invention shall not be limited to the embodiments described above, and can be implemented in various forms without departing from the gist of the present invention.

In the above embodiments, the thickness t of the pipe 1 is 0.8 mm. However, with respect to the pipe 1, the thickness t should not be limited to 0.8 mm, and may be other thicknesses including 1.0 mm and 1.2 mm.

In the first embodiment described above, the inner diameter of the double-pipe portion 2 and the inner diameter of the single-walled portion 1a are approximately the same as each other, but they may be different from each other.

In the embodiments described above, a plate having a thickness of 3.2 mm is utilized as a plate to form the flange member 11, but a plate having a different thickness may be used.

## Claims

1. A welding connection structure for a pipe,
wherein the pipe has a double-pipe portion at at least one end thereof, the double-pipe portion being formed by bending back a pipe wall at the one end of the pipe inward and forming a bent-back portion in close contact with an outer pipe wall, and
wherein the pipe is connected by welding, at the double-pipe portion, to a mating member to which the pipe is to be connected.

2. The welding connection structure for a pipe according to claim 1,
wherein the pipe is configured such that at least a part of the double-pipe portion has a larger outer diameter than an other part, such that a portion between the at least a part of the double-pipe portion (hereinafter referred to as a large-diameter portion) and a portion having a smallest outer diameter in the pipe (hereinafter referred to as a small-diameter portion) is formed in a tapered shape, and such that the portion formed in a tapered shape (hereinafter referred to as a tapered portion) is formed to have a taper angle θ smaller than 25 degrees.

3. The welding connection structure for a pipe according to claim 1 or 2,
wherein an inner diameter of the large-diameter portion is approximately the same as an inner diameter of a single-walled portion, which is a portion other than the double-pipe portion.

4. The welding connection structure for a pipe according to claim 2,
wherein at least a part of the tapered portion is configured as the double-pipe portion,
